# EUROPÄISCHE PATENTSCHRIFT

(11) **EP 0 864 223 B1**
(45) Veröffentlichungstag und Bekanntmachung des Hinweises auf die Patenterteilung: **24.04.2002**
(21) Anmeldenummer: 97909324.2
(22) Anmeldetag: 27.09.1997
(51) Int. Cl.: H04N 3/15

(54) **LOKALAUTOADAPTIVER OPTISCHER SENSOR**
LOCAL AUTO-ADAPTIVE OPTIC SENSOR
DETECTEUR OPTIQUE AUTOADAPTIF LOCAL

(30) Priorität: 27.09.1996 DE 19639863
(43) Veröffentlichungstag der Anmeldung: 16.09.1998
(73) Patentinhaber: BÖHM, Markus, 57068 Siegen (DE)
(72) Erfinder: BÖHM, Markus, Uni.-Gesamthochschule Siegen, 57068 Sliegen (DE); LULE, Tarek, D-57076 Siegen (DE)
(74) Vertreter: Schippan, Ralph, Dr.-Ing.
(86) Internationale Anmeldenummer: EP9705306
(87) Internationale Veröffentlichungsnummer: WO9814002

(56) Entgegenhaltungen:
- EP-A- 0 749 234
- GB-A- 2 197 718
- PATENT ABSTRACTS OF JAPAN vol. 095, no. 006, 31.Juli 1995 & JP 07 067042 A (MATSUSHITA ELECTRIC IND CO LTD), 10.März 1995,

## Beschreibung

Die vorliegende Erfindung betrifft ein Verfahren fur den Betrieb von Bildsensoren nach dem "lokalautoadaptiven Verfahren" zur Aufnahme von hochdynamischen Bildszenen.

Elektronische Bildsensoren sind bekannt und werden in den unterschiedlichsten Technologien hergestellt. Solche Sensoren sind so aufgebaut, daß eine Anzahl Lichtwandelelemente (Pixel) in geeigneter weise angeordnet sind, meist als eine einzige Zeile oder in Spalten und Zeilen als Matrix geordnet. Ein auf den Bildsensor projiziertes Bild wird von den Pixeln in ein der am Pixelort einfallenden Lichtmenge proportionales elektrisches Signal umgewandelt. Die zugehorige Proportionalitätskonstante wird als Umwandlungsempfindlichkeit (Empfindlichkeit) des Sensors bezeichnet. In einem sehr verbreiteten Typ von Bildsensor, dem "integrierenden Bildsensor", erzeugen die Pixel das Ausgangssignal, indem sie photostromgenerierte Ladungsträger über ein gewisses Zeitintervall (Integrationszeit) auf eine Kapazität aufintegrieren. Das elektrische Signal wird mittels geeigneter, am Pixel anliegender Ansteuersignale (Takt- o. Lesesignal) und vom Pixel wegführender Auslesepfade ausgelesen und mit geeigneten Mitteln bildauswertenden oder bildverwertenden Einheiten wie zum Beispiel einem Aufzeichnungsgerat zugeführt.

Ein wesentliches Merkmal eines Bildsensors ist seine Dynamik. Sie ist definiert durch die maximale und die minimale Bildhelligkeit am Pixelort, die zu einem sinnvoll verwertbaren Signal am Ausgang des Bildsensors führen. Nach unten ist die Dynamik begrenzt durch das elektrische Rauschen des Ausgangssignals: ein Pixelsignal, das kleiner ist als das elektrische Rauschen, ist nicht verwertbar. Nach oben ist die Dynamik durchweg begrenzt durch die Sättigung der für die Signalwandlung und Signalübertragung verwendeten Komponenten.

Ein weithin bekanntes Problem von Bildsensoren ist nun, daß ihre Dynamik nicht ausreicht, um die in vielen Anwendungsgebieten auftretenden Helligkeitskontraste voll auf das Ausgangssignal abzubilden. Dadurch werden entweder dunkle Bildteile vom Rauschen verschluckt und/oder hellere Bildteile sind in der Sättigung, was zusätzlich zu weiteren Störungen wie Smear oder Blooming führen kann. Zur Behebung des Problems der begrenzten Dynamik sind einige Verfahren bekannt.

Das US-Patent Nr. 5168532 sei stellvertretend fur eine große Zahl von Patenten und Veröffentlichungen genannt, die die effektive Dynamik eines Bildsensorsystems nach dem Prinzip der "Zweifachauslese" erhöhen. Hierzu wird das Bildsensorsystem mit einer Möglichkeit versehen, die oben benannte Empfindlichkeit variieren zu können; z.B. durch Wahl der Integrationszeitdauer eines integrierenden Bildsensors oder noch einfacher mit Hilfe einer Irisblende. Sodann werden zwei Bilder aus dem Bildsensor ausgelesen, eines bei einer niedrigen Empfindlichkeit, eines bei einer hohen Empfindlichkeit. Diese zwei Bilder werden anschließend nach einem geeigneten Verfahren zu einem Gesamtbild zusammengefügt. Das Verfahren der "Mehrfachauslese", das ebenfalls in den verschiedensten Varianten patentiert und veröffentlicht wurde (z.B. US-Patent Nr. 5638118), ergänzt das Verfahren der "Zweifachauslese" nur insofern, als statt zweier eine höhere Anzahl von Bildern mit unterschiedlichen Empfindlichkeiten aufgenommen, gespeichert und zusammengefügt werden. Beiden Verfahren ist der erhebliche Nachteil eines komplizierteren Sensor-Systems gemeinsam, das neben dem Bildsensor noch Mittel zur Speicherung und zur Verarbeitung der Bilddaten enthält, wie z.B. einen Framegrabber.

Einer zweiten Gruppe von Verfahren zur Erhöhung der Sensordynamik ist die Kompression des Bildsignals bei der Signalerzeugung im Pixel gemeinsam. Bei dem gängigen Kompressionsverfahren der logarithmischen Kompression wird der lichtabhängige Photostrom in eine logarithmisch davon abhängige Signalspannung umgewandelt durch Ausnutzung der logarithmischen Spannungs-Stromkennlinie von Dioden oder MOS-Transistoren im Betrieb unterhalb der Schwellspannung, wie beispielsweise veröffentlicht von N. Ricquier und B. Dierickx in "Active Pixel CMOS image sensor with on-chip non-uniformity correction", IEEE Workshop on CCDs and Advanced Image Sensors, California, 20-22. April, 1995. Diese und alle anderen Kompressionssensoren verlieren durch die Dynamikkompression Bilddetails. Desweiteren werden ortsfeste Störungen (sog. "Fixed Pattern Noise" oder FPN), die durch lokale Schwankungen der Bauelementeparameter wie Transistorschwellspannungen oder Kapazitäten in den Pixeln und den Signalpfaden entstehen, exponentiell verstärkt, was wiederum durch aufwendige Maßnahmen korrigiert werden muß. Andere Verfahren (beispielsweise US-Patent Nr. 5572074 oder "Analog VLSI phototransduction by continuous-time, adaptive, logarithmic photoreceptor circuits" von T. Delbrück und C.A. Mead in Computation and Neural Systems Program, Technical Report, CNS memorandum No. 30, 1994, S. 1-23, California Inst. of Technology, Pasadena, CA 91125) steuern mit Hilfe einer aufwendigeren Pixelschaltung die Pixelempfindlichkeit lokal durch das vom Pixel selbst produzierte Ausgangssignal; effektiv entspricht das Verfahren jedoch wieder den Kompressionsverfahren mit den gleichen nachteiligen Folgen.

Bessere Verfahren zum Betrieb von Bildsensoren mit hoher Dynamik stellen die lokaladaptiven Verfahren dar. Ein lokaladaptives Verfahren ist dadurch gekennzeichnet, daß die Empfindlichkeit des Bildsensors nicht für alle Pixel gleichzeitig (global) sondern für kleinere Untergruppen von Pixeln, bevorzugt für jedes Pixel einzeln einstellbar ist (lokal). Der Natur der Bildsensoren gemäß kann dazu an unterschiedlichen Punkten des Signalweges angesetzt werden.

Verfahren, die das auf die Pixel fallende Licht pixelweise schwächen, sind in den US-Patenten Nr. 5532743 (Abschwächung durch LCD-Pixel), Nr. 55410705 (Abschwächung durch Polarisatoren) und Nr. 5218485 beispielhaft beschrieben. Sie setzen alle einen diffizileren optischen Aufbau und eine aufwendige, externe Ansteuerung der Abschwächungselemente voraus.

Einfachere Systeme mit höherer Dynamik erreicht man mit solchen lokaladaptiven Verfahren, die die Integrationszeit pixelweise steuern. Ein gängiges Verfahren mit lokaladaptiver Integrationszeit bedient sich dem individuellen Pixelreset, IPR; so z.B. von O. Yadid-Pecht, B. Pain, C. Staller, C. Clark und E. Fossum berichtet in 'CMOS Active Pixel Sensor Star Tracker with Regional Electronic Shutter', IEEE Journal of Solid-State Circuits, Vol. 32, No. 2, Feb. 1997 und in 'Wide dynamic range APS star tracker', Solid State Sensor Arrays and CCD cameras, San Jose,California, Proceedings of the SPIE, Vol. 2654, S. 82-92, 1996 sowie von Chen S., Ginosar R. in 'Adaptive Sensitivity CCD Image Sensor', Proceedings of the SPIE, Vol. 2415, S. 303-309, 1995. Bei den beschriebenen Sensoren wurden die Pixelschaltungen derart modifiziert, daß ihre Integrationskapazität zu jedem Zeitpunkt in jedem Pixel einzeln zurückgesetzt werden kann. Dadurch kann in gewissen Grenzen für jedes Pixel eine eigene Integrationszeitdauer erreicht werden und mithin die Pixelempfindlichkeit an die am jeweiligen Pixelort auftreffende Lichtintensität adaptiert werden. Die beschriebenen Verfahren zeichnen sich durch einen geringen Zusatzaufwand in der Pixeischaltung bei gleichzeitig großer Dynamik aus.

Bei dem am Insitut für Halbleiterelektronik der Universitat-GH Siegen entwickelten lokaladaptiven Bildsensor (LAS) läßt sich die Integrationszeit jedes Pixels einzeln schon vor der eigentlichen Integrationsphase in Form einer Analogspannung in die Pixel programmieren. (siehe T. Lulé, H. Fischer, S. Benthien, H. Keller, M. Sommer, J. Schulte, P. Rieve, M. Böhm, "Image Sensor with Per-Pixel Programmable Sensitivity in TFA Technolgy", H. Reichl, A. Heuberger, Micro System Technologies '96, VDE-Verlag, Berlin, Offenbach, S. 675 ff., 1996)

Nachteilig an den Verfahren des IPR und des LAS ist jedoch der erhebliche Aufwand an Zusatzschaltungen, der nötig ist, um aus dem zuletzt ausgelesenen Bild pixelweise die für den nächsten Integrationszyklus benotigten Belichtungszeiten und daraus resultierenden Ansteuertakte zu generieren. Der zusätzliche Nachteil der IPR-Verfahren liegt in dem Problem, alle Pixel während der Integrationsphase in der gewünschten Reihenfolge zurücksetzen zu müssen, was zu Kollisionen und nichtdeterministischen Taktüberkopplungen auf die empfindliche Pixelelektronik führen kann. Darüberhinaus haftet allen bis hierhin beschriebenen adaptiven Verfahren der Nachteil des Zeitverzugs an; die für eine Integrationsphase einzustellende Empfindlichkeit wird aus den Pixelsignalen der vorherigen Integrationsphase gewonnen, wodurch eine situationsgemäße Einstellung der Pixelempfindlichkeit nicht sicher gewährleistet ist.

Aus JP-A-07067042 ist ein Bildsensor und ein Verfahren zu dessen Betrieb bekannt, bei dem jeweils bezogen auf ein einzelnes Pixel der Endzeitpunkt der Integration so beeinflußt wird, daß höhere Lichtintensitäten zu kürzeren Integrationszeiten führen, während niedrigere Lichtintensitäten zu längeren Integrationszeiten führen. Die Auswerteschaltung weist einen einzigen Speicher auf, dessen Speicherwert die Intensität des einfallenden Lichtes repräsentiert.

Der Erfindung liegt das Problem zugrunde, die Empfindlichkeiten der Pixel eines Bildsensors ohne Zeitverzug und mit geringem Schaltungsaufwand an die am Pixelort herrschende Helligkeit anzupassen und mithin die effektive Dynamik des Bildsensors zu erhöhen.

Die Aufgabe wird durch die Adaption an die am Pixelort herrschende Helligkeit durch die Pixelschaltung selbst gelöst, die Pixel sind lokalautoadaptiv.

Ein verfahren und eine Vorrichtung gemäß der Erfindung sind in den Ansprüchen 1 und 13 definiert.

Das Prinzip der Lokalautoadaptivität wurde bekannt gemacht durch O. Yadid-Pecht in "The Automatic Wide-Dynamic-Range Sensor", SID 93, Intl. Symp., Digest, S. 495-498, 1993. Dort wurde die Lokalautoadaptivität erreicht durch die Fähigkeit des Pixels sich selbst zurücksetzen zu können, wenn das aufintegrierte Signal einen Schwellwert überschreitet. Prinzipiell wird dadurch zwar eine Sättigung der Pixel verhindert, die Integrationszeit wird dennoch nicht sicher an die auf das Pixel fallende Lichtintensität angepaßt, da es z.B. passieren kann, daß ein schwach beleuchtetes Pixel sich kurz vor Ende der Integrationsphase noch einmal zurücksetzt und in der verbleibenden, sehr kurzen Integrationszeit keine nennenswerte Signalspannung mehr aufintegrieren kann.

Zudem muß die Integrationsdauer, die vom Pixel gewählt wurde, auf geeignete Weise den nachfolgenden bildauswertenden Stufen mitgeteilt werden, damit die Helligkeit am Pixelort aus den zwei Größen Integrationsdauer und aufintegriertes Pixelsignal rekonstruiert werden kann. O. Yadid-Pecht läßt dieses Problem weitgehend unbeantwortet und erwähnt nur in "Widening the dynamic range of pictures", High Resolution Sensors and Hybrid Systems, San Jose, CA, Proceedings of the SPIE, Band 1656, S. 374-382, 1992, daß die Integrationszeit lokal in 4 Flipflops gespeichert werden sollte, was zu einem erheblichen Aufwand an Pixelschaltung und zusätzlichen Ansteuerleitungen führt. Um die effektive Größe der Pixelfläche nicht völlig unwirtschaftlich werden zu lassen, schlägt die Autorin weiter vor, die lokalautoadaptive Steuerung nur einmal pro Pixelblock von beispielsweise 8 x 8 Pixeln zu realisieren, was den Vorteil der Lokalautoadaptivität sofort zunichte macht, da ein starker Hell-Dunkelübergang innerhalb dieses Pixelblocks zu den gleichen Dynamikbeschränkungen führt wie sie bei den globaladaptiven Sensoren auftreten.

Die erfindungsgemäße Lösung des Problems besteht in einem integrierenden, lokalautoadaptiven Pixel, das seine Integrationszeit automatisch, autark beendet noch bevor soviele photogenerierte Ladungen aufintegriert wurden, daß das Ausgangssignal sättigt. Dieses Verfahren unterscheidet sich dadurch von dem vorgenannten, daß das Pixel den Endzeitpunkt der Integrationsperiode selbst bestimmt und nicht den Anfangszeitpunkt.

Ein vorteilhaftes Verfahren zur Beendigung der Integrationszeit stelit ein elektronischer Schalter dar, der in den Pfad des Photostromes vom Detektor zur Integrationskapazität eingeschleift wird und der zur Beendigung der Integrationszeit den Strompfad vom Detektor zur Kapazität unterbricht. Ein dem vorgenannten Verfahren gleichwertiges stellt ein elektronischer Schalter dar, der zwischen einer ersten Integrationskapazität, auf die der lichtproportionale Photostrom während der gesamten Integrationsphase fließt, und einer zweiten Haltekapazität eine leitende Verbindung herstellt zu dem Zeitpunkt, da die Integrationszeit des betroffenen Pixels beendet werden soll, so daß die Spannung auf der Haltekapazität nach Ende der Integrationsphase proportional zur Spannung auf dem Integrationskondensator zum ebengenannten Zeitpunkt ist. Pixelschaltungen mit solchen elektrischen Schaltern sind hinlänglich bekannt und werden bei fast allen integrierenden Bildsensoren zur globalen Steuerung der Integrationszeit eingesetzt.

Der besondere Vorteil der vorstehend genannten Lösung besteht darin, daß ein so betriebener Sensor bei geringem Aufwand eine gegenüber einem herkömmlichen Sensor wesentlich höhere Dynamik aufweist, so daß dieser Sensor bei wesentlich höheren Kontrasten der Bildszene noch in alien Bildausschnitten auswertbare Ausgangssignale liefert. Weiterhin liegt das Ausgangssignal für einen erheblich erweiterten Bereich von Bildhelligkeiten immer im oberen Bereich der Aussteuerung, was automatisch einen verbesserten Signal-zu-Rausch-Abstand und damit eine verbesserte Bildqualität mit sich bringt.

Ein weiterer Vorteil des Verfahrens besteht darin, eine Information (im folgenden Integrationssignal) im Pixel zu speichern, die Auskunft darüber abgibt, wie lange die Integrationsdauer des Pixels betrug, und die zusammen mit dem aufintegrierten Pixelsignal aus dem Bildsensor ausgelesen wird, so daß die am jeweiligen Pixelort herrschende Helligkeit aus dem Integrationssignal und dem Pixelsignal eindeutig ermittelt werden kann. Vorteilhaft ist dabei, das Integrationssignal analog im Pixel zu speichern, das heißt beispielsweise in Form einer Spannung, eines Stromes oder einer Ladung. Solche analoge Informationsspeicher wie eine Kapazität oder ein Stromspiegelspeicher sind hinlänglich bekannt und lassen sich in gängigen Bildsensor-Technologien wie z.B. CMOS, BiCMOS oder TFT auf kleinerer Fläche realisieren als ein Digitalwertspeicher mit gleichem Informationsgehalt, wie er beispielsweise von O. Yadid-Pecht vorgeschlagen wurde. Aber auch eine Speicherung des Integrationssignals als Digitalsignal kann eine vorteilhafte Möglichkeit darstellen, da sie eine wesentlich höhere Störsicherheit bietet.

Weiterhin bestehen die Möglichkeiten, dieses Integrationssignal innerhalb des Pixels autark zu generieren, von außen in das Pixel hineinzutragen oder mit Hilfe von außen in das Pixel hineingetragenen Signalen zu generieren. Vorzugsweise wird das Signal vollständig von außen in das Pixel hineingetragen, da hierdurch weitere Komponenten für die Signalgenerierung im Pixel eingespart werden und das Pixel das von außen angelegte Signal nur noch speichern muß. Geeigneterweise legt man das von außen heranzutragende Signal an alle Pixel oder zumindest an größere Gruppen wie beispielsweise ganze Spalten oder Zeilen von Pixeln gleichzeitig an, so daß nur eine geringere Anzahl von Generatoren für dieses Signal bereitgestellt werden muß, als der Sensor Pixel hat. Diese Generatoren liefern dann ein Signal wie eine Spannung oder einen Strom oder ein digitales Wort, das sich zweckmäßigerweise monoton zur schon verstrichenen Integrationszeit verhält, wie zum Beispiel eine Spannungsrampe. Sobald ein Pixel seine Integrationszeit beendet, speichert es zu diesem Zeitpunkt nicht nur das bis dahin aufintegrierte Pixelsignal im Belichtungskondensator, sondern auch das von seinem zugehörigen Generator von außen angelegte Integrationssignal in seinem internen Integrationssignalspeicher.

Der besondere Vorteil der vorstehend genannten Lösung besteht darin, daß die Helligkeitsinformation auf zwei Signalgrößen aufgeteilt wird, zum einen in das Pixelsignal und zum anderen in das Integrationssignal, das Auskunft über die Integrationszeitdauer abgibt. Auf diese zwei Signale aufgeteilt, kann eine wesentlich höhere Helligkeitsdynamik weitergegeben werden, als es mit einem Signal möglich wäre, da das Integrationssignal sozusagen eine Grobskalierung vorgibt, während das Pixelsignal die Feininformation liefert. Insbesondere in gewerblichem Umfeld, wo eine Vielzahl an elektrischen Störquellen die Signaldynamik auf den Übertragungswegen beschrankt, stellt diese Aufteilung der Dynamik die einzige Möglichkeit dar, Bilder mit sehr hoher Signaldynamik (>100dB) zu verarbeiten.

Eine vorteilhafte Weiterbildung des Verfahrens besteht darin, daß die Beendigung der Integration nur zu wenigen, von außerhalb des Pixels vorgegebenen Zeitpunkten erfolgen kann, die durch ein von außen an das Pixel angelegtes Taktsignal definiert werden. Der Vorteil dieser Zeitdiskretisierung liegt in der präziseren Kontrolle über die von den Pixeln wählbaren Integrationsperioden. Insbesondere die sich bei hohen Beleuchtungsstärken einstellenden, sehr kurzen Integrationszeitdauern müssen mit einer so hohen Präzision eingestellt und vom Integrationssignal erfaßt werden können, daß die Ungenauigkeiten noch viel kleineren Zeiten entsprechen, als die Integrationszeitdauer ohnehin schon ist, was durch eine getaktete Diskretisierung der Integrationszeitdauern besonders vorteilhaft erreicht wird.

Eine vorteilhafte Weiterbildung des Verfahrens, insbesondere im Zusammenhang mit der Zeitdiskretisierung der Integrationsperioden und der Verwendung eines analogen Integrationssignals, stellt die Verwendung eines amplitudendiskretisierten, analogen Integrationssignals dar derart, daß das Integrationssignal nur diskrete Amplituden annehmen kann. Die Amplitudendiskretisierung des Integrationssignals hat den Vorteil, daß nachfolgende, bildverwertende Stufen über eine Schwellwertbildung die gewählte Integrationsperiode präzise rekonstruieren können und daß die in Analogschaltungen unvermeidlichen Storeinflüsse wie Rauschen und FPN bei ausreichendem Abstand der Diskretisierungsstufen keinen Einfluß auf die Schwellwertbildung und damit auf die rekonstruierte Integrationszeitdauer hat.

Im Falle der digitalen Speicherung des Integrationssignals liegt von der Natur der Sache schon eine Wertdiskretisierung vor, die in der besagten Amplitdendiskretisierung des Analogsignals eine Entsprechung findet. Weiterhin ist die digitale Speicherung am vorteilhaftesten zusammen mit der besagten Zeitdiskretisierung einzusetzen, da so jeder Integrationszeit eineindeutig ein digitaler Wert zugewiesen werden kann. Von dem Standpunkt aus betrachtet, wie er in modernsten Speichertechnologien vertreten wird, daß ein grob amplitudendiskretisiertes Analogsignal ein Multilevel-Digitalsignal darstellt, ist der Übergang von einem reinen, binären Digitalsignal zum amplitudendiskretiiserten Analogsignal fließend und variantenreich.

Eine vorteilhafte Weiterbildung des Verfahrens stellt die Verwendung einer exponentiellen Verteilung der diskretisierten Integrationsperioden dar. Mit exponentieller Verteilung ist eine derartige Auswahl an vorgegebenen, vom Pixel wählbaren Integrationsperioden gemeint, daß jeweils eine Integrationsperiode um einen festen Faktor länger ist als die nächstkürzeren wählbare. Diese Verteilung ist eine von anderen Anwendungsgebieten wie zum Beispiel den Verschlußzeiten eines Fotoapparates her bekannte Verteilung, die für eine gleichmäßige Abdeckung der vielen Zehnerpotenzen möglicher Lichtintensitäten sorgt.

Eine vorteilhafte Weiterbildung des Verfahrens stellt die technologische Realisierung des lokalautoadaptiven Bildsensors in der am Institut fur Halbleiterelektronik der Universität-GH Siegen von Prof. Böhm und seinen Mitarbeitern entwickelten TFA-Technologie dar, wie sie z.B. von Prof. M. Böhm in "Intelligent Image Sensor Systems in TFA (Thin Film on ASIC) Technology", einem Vortrag anläßlich des Special Course on Intelligent Sensors, University of Roorkee, Roorkee U.P., Indien, 1995, beschrieben ist. Der dort aufgewiesene Vorteil der vertikalen Integration des elektrooptischen Detektors auf dem signalverarbeitenden ASIC macht sich insbesondere bei den lokalautoadaptiven Sensoren bezahlt, da sich nicht Pixelelektronik und Detektor gegenseitig den Platz wegnehmen wie beispielsweise bei der reinen CMOS-Technclogie, sondern die von der etwas umfangreicheren Pixelelektronik eingenommene Chipfläche gleichzeitig dem darüberliegenden Detektor zur Verfügung steht, der dadurch empfindlicher wird.

Weitere vorteilhafte Weiterbildungen des Verfahrens gehen aus weiteren Unteransprüchen hervor.

Ein Ausführungsbeispiel der Erfindung, die bevorzugte Vorrichtung zur Durchführung von vorstehend beschriebenen Verfahren, wird in den folgenden Figuren dargestellt und im weiteren näher bechrieben. Das Ausführungsbeispiel stellt einen erfindungsgemäßen, in TFA-Technologie realisierten Bildsensor mit 90dB Dynamik dar.

Fig. 1 zeigt das Blockschaltbild der lokalautoadaptiven Pixelelektronik mit automatischer Integrationsabschaltung und Integrationssignalspeicherung.

Fig. 2 zeigt die Ansteuersignale fur den Betrieb des Pixels nach Fig. 1 während der Integrationsphase.

Fig. 3 zeigt die von einem Pixel nach Abschluß der Integrationsphase in der Auslesephase ausgegebenen Integrations- und Pixelsignale aufgetragen über der auf diesem Pixel auftreffenden Lichtintensität.

Fig. 4 zeigt schematisch das Zusammenspiel der Pixel eines Flächensensors mit den peripheren Schaltungen auf dem Bildsensorchip.

Das Pixellayout in Fig. 5 ist zur Verdeutlichung der moderaten Komplexität eines lokalautoadaptiven Pixels angefügt.

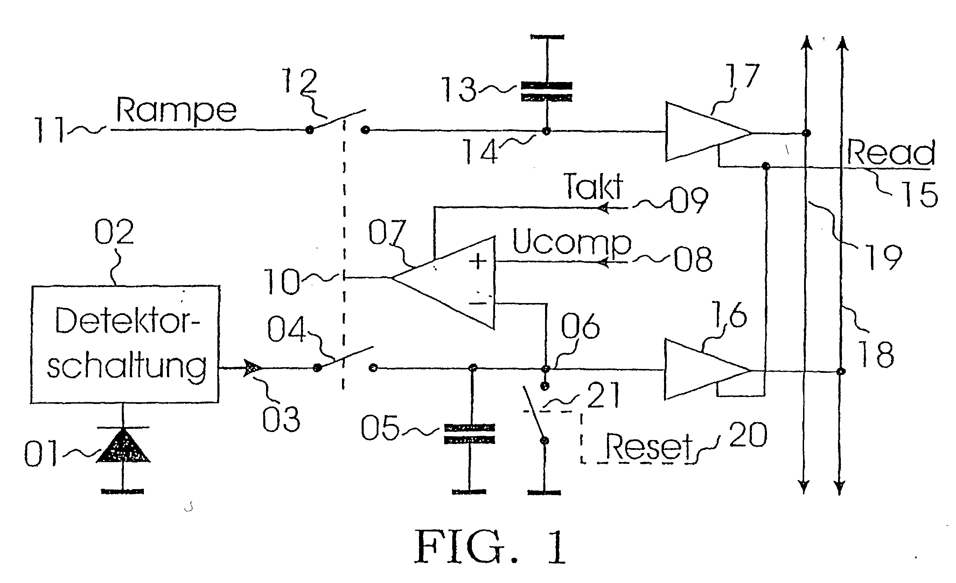

Fig. 1 zeigt das Blockschaltbild des in TFA-Technologie realisierten lokalautoadaptiven Pixels. Auf der Pixelschaltung befindet sich der lichtempfindliche Detektor **01** aus amorphem Silizium, dessen Kathode mit der in der Pixelschaltung realisierten Detektorschaltung **02** verbunden ist. Die Detektorschaltung ist ein Spezifikum der TFA-Technologie und nicht von Bedeutung für die Lokalautoadaptivität des Pixels. Sie hält die Spannung an der Kathode des Detektors **01** auf konstantem Wert, was die TFA-spezifischen Kopplungen zwischen benachbarten Detektoren unterdrückt.

Der vom Detektor **01** herrührende und von der Detektorschaltung **02** weitergereichte Photostrom **03** wird während der Integrationsphase über den geschlossenen Photostromschalter **04** auf der Integrationskapazitat **05** aufintegriert. Die resultierende Pixelspannung **06** am Integrationskondensator **05** wird vom getakteten Pixelkomparator **07** mit einer dem Pixel von außen zugeführten Vergleichsspannung **08** verglichen. Das Vergleichsergebnis erscheint erst nach einem Taktsignal von Takt **09** am Steuerausgang **10** des Pixelkomparators **07**. Hat die Pixelspannung **06** zum Zeitpunkt des Taktsignals die Vergleichsspannung **08** überschritten, so schaltet der Steuerausgang **10** den Photostromschalter **04** aus und beendet damit die Integrationsperiode für die aktuelle Integrationsphase. Gleichzeitig mit jedem Taktsignal an Takt **09** liegt am Integrationssignaleingang Rampe **11** eine steigende, stufige Spannungsrampe an, die über den geschlossenen Integrationssignalschalter **12** auf den Integrationssignalkondensator **13** gegeben wird. In dem Moment, da der Steuerausgang **10** die Photostromintegration über Schalter **04** beendet, öffnet derselbe Steuerausgang **10** auch den Integrationssignalschalter **12**, so daß die Integrationssignalspannung **14** auf dem Integrationssignalkondensator **13** auf dem Spannungswert stehen bleibt, der zum Zeitpunkt der Abschaltung am Integrationssignaleingang Rampe **11** anlag.

In der nachfolgenden Auslesephase veranlaßt ein Lesesignal am Eingang Read **15** den Pixelsignalpuffer **16** und den Integrationssignalpuffer **17**, das aufintegrierte Pixelsignal **06** und das festgehaltene Integrationssignal **14** auf die Pixelsignal-Spaltenleitung **18** bzw. die Integrationssignal-Spaltenleitung **19** auszugeben.

Vor der nächsten Integrationsphase schließt ein Resetsignal am Eingang Reset **20** den Resetschalter **21** und löscht damit das aufintegrierte Pixelsignal **06**. Mit dem nächsten Taktsignal am Eingang Takt **09** schließen der Photostromschalter **04** und der Integrationssignalschalter **12** wieder, und die nächste Integrationsphase beginnt.

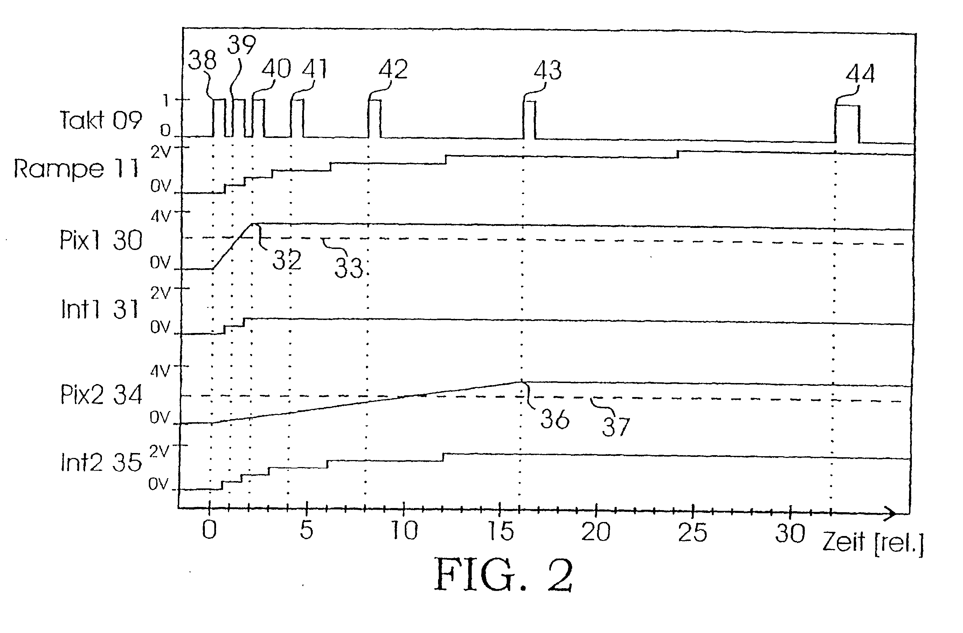

Fig. 2 zeigt über der Zeit aufgetragen die Steuertakte Takt 09 und Rampe **11** sowie das Integrationssignal **14** und das Pixelsignal **06** jeweils fur zwei Pixel - ein Pixel bei hoher Beleuchtung (Pix1 **30** bzw. Intl **31**) und ein Pixel bei niedrigerer Beleuchtung (Pix2 **34** und Int2 **35**). Das Signaldiagramm zeigt ein Ausführungsbeispiel mit sechs wählbaren, exponentiell verteilten Integrationszeiten **39** bis **44,** wobei die Zeitachse in relativen Einheiten angegeben ist.

Mit der ersten steigenden Flanke **38** von Takt **09** startet die Integrationsphase, ab hier laufen die aufintegrierten Pixelspannungen Pix1 **30** und Pix2 **34** hoch. Mit jeder weiteren steigenden Flanke von Takt **09** kann ein Pixel bei ausreichend hoher Pixelspannung seine Integrationsperiode beenden. Würde beispielsweise ein Pixel bei der Taktflanke **39** seine Integration beenden, dann dauerte seine Integrationsperiode 1 Zeiteinheit, bei Taktflanke **40** dauerte sie 2 Zeiteinheiten, bei Taktflanke **41** dauerte sie **4** Zeiteinheiten, bei Taktflanke **42** 8 Zeiteinheiten, bei Taktflanke **43** 16 Zeiteinheiten; würde ein Pixel bei Taktflanke **44** seine Integrationsperiode beenden, dann dauerte seine Integrationsperiode 32 Zeiteinheiten. Die wählbaren Zeiteinheiten sind also in diesem Ausführungsbeispiel exponentiell zur Basis 2 gewählt worden.

Die Vergleichsspannungen Ucomp **08** wurden für diese Verteilung der Zeiteinheiten auf halben Pixelsignalhub **33** bzw. **37** gesetzt. Hat ein Pixelsignal **06** innerhalb einer Integrationsperiode den halben Signalhub noch nicht uberschritten, so wird es in der nächst längeren, doppelt so langen Integrationsperiode nicht den vollen Signalhub uberschreiten, so daß es noch weiter aufintegriert werden kann, vorausgesetzt, daß sich die Helligkeit am Pixelort Wahrend der folgenden, zusätzlichen Integrationszeit nicht wesentlich ändert. Hat ein Pixelssignal **06** innerhalb einer Integrationsperiode jedoch den halben Signalhub schon überschritten, so wurde es in der nächst längeren, doppelt so langen Integrationsperiode den vollen Signalhub überschreiten, so daß die Integration beendet werden muß. Durch diese Kombination von wählbaren Integrationszeiten und Vergleichsspannung wird also sichergestellt, daß die aufintegrierte Pixelspannung sich immer in der oberen Hälfte des vollen Signalhubs befindet. Eine Verbesserung in der Hinsicht einer Robustheit gegenüber Helligkeitsschwankungen im Laufe einer Integrationsphase stellt die Wahl einer niedrigeren Vergleichsspannung dar; sie erlaubt der Pixelhelligkeit während der Integrationsphase in beschränktem Umfang anzusteigen, ohne daß das Pixel dadurch sättigt.

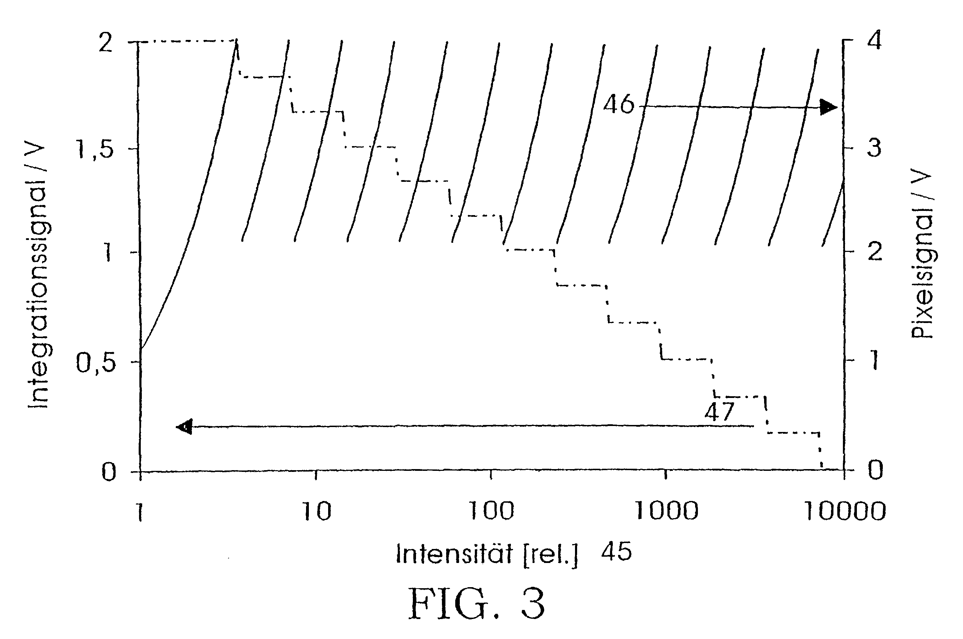

Das in Fig. 3 über der relativen Beleuchtungsintensität **45** aufintegrierte Pixelsignal **46** und Integrationssignal **47** verdeutlichen diese sehr vorteilhafte Eigenschaft des lokalautoadaptiven Pixels. Aufgrund der logarithmischen Auftragung der Intensität auf der horizontalen Achse erscheint die Pixelsignalkurve gekrümmt, während die in exponentiellen Abständen verteilten Rampenstufen **11** hier jeweils gleiche Breiten aufweisen.

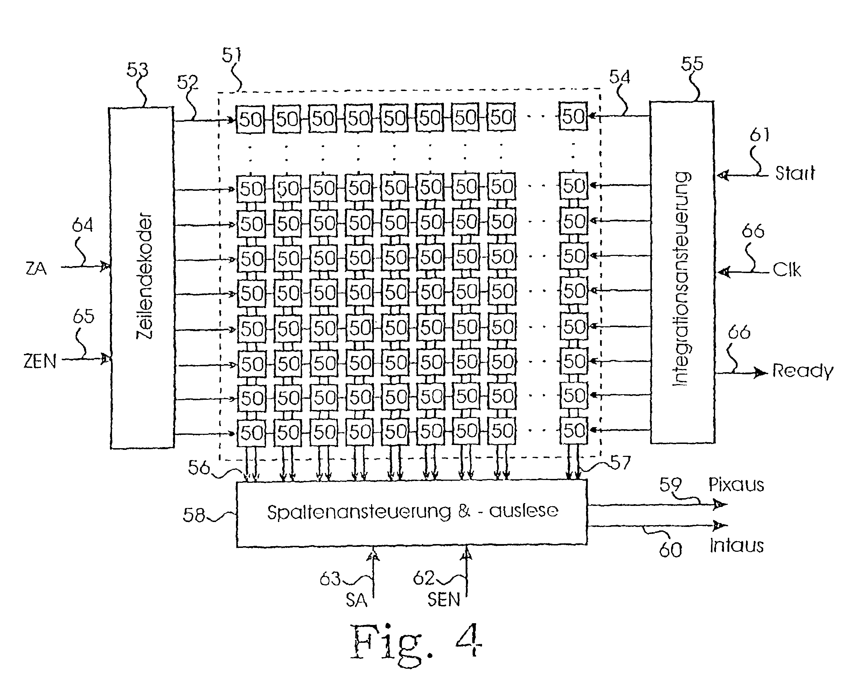

Das in Fig. 4 gezeigte Blockdiagramm zeigt schematisch das Zusammenspiel der Pixelschaltungen **50** mit den Peripheriekomponenten **53, 55** und **58** in einem Flächensensor. Während der Integrationsphase versorgt die Integrationssteuerung **55** die in Spalten und Zeilen angeordneten Pixel **50** der Pixelmatrix **51** mit den notwendigen Ansteuersignalen wie Reset **20**, Takt **09**, Rampe **11** und Ucomp **08**, die die Integrationssteuerung **55** aus einem Eingangstakt Clk **66** erzeugt. Die Signale werden für alle Pixel **50** gemeinsam erzeugt, so daß alle Pixel **50** der Pixelmatrix **51** synchron ihre Integrationsperioden beginnen, während sie wie oben beschrieben den Endzeitpunkt selbst wählen.

Das Ende der Integrationsphase wird den außerhalb des Chips liegenden Schaltungsteilen durch ein Signal am Ausgang Ready **67** angezeigt. Jetzt können diese eine Zeilenadressen ZA **64** und das Zeilenfreigabesignal ZEN **65** an den Zeilendekoder 53 legen, der dann die gewünschte Zeilenleseleitung **52** aufsteuert. Die Zeilenleseleitung **52** ist mit den Pixelleseleitungen Read **20** aller Pixel **50** in der Zeile verbunden und sorgt dafür, daß alle Pixel **50** der ausgewählten Zeile ihre aufintegrierten Pixelsignale **06** und festgehaltenen Integrationssignale **14** auf die Pixelsignal-Spaltenleitungen **18** bzw. die Integrationssignal-Spaltenleitungen **19** ausgeben.

Von all den parallel an der Spaltenansteuerung- und auslese 58 anliegenden Pixelsignal- und Integrationssignal-Spaltenleitungen **56, 57** wählt die Spaltenansteuerung- und auslese **58** die Spalte aus, die durch die von außen vorgegebene Spaltenadresse SA **63** ausgewählt wird. Mit anliegendem Spaltenfreigabesignal SEN **62** werden das ausgewählte Pixelsignal **06** und das ausgewählte Integrationssignal **14** auf den Pixelausgang Pixaus **59** und den Integrationssignalausgang Intaus **60** ausgegeben. Nach erfolgter Auslese aller Pixel **50** wird dann durch ein Signal an Start **61** die nächste Integrationsphase in der Integrationssteuerung **55** angestoßen.

## Patentansprüche

1. Verfahren zum Betrieb von integrierenden Bildsensoren, bestehend aus
a) einer Anordnung von lichtwandelnden Pixeln, die jeweils bestehen aus
aa) einem lichtempfindlichen Element (01) zur photoelektrischen Konvertierung der auf es fallenden Lichtintensität in einen lichtintensitätsabhängigen Photostrom;
ab) einer integrierenden Vorrichtung (04,05), um innerhalb einer Integrationsphase den besagten Photostrom über eine gewisse Integrationszeitdauer zu einem Pixelsignal (06) aufzuintegrieren;
ac) einer zeitdauersteuernden Vorrichtung (07-10) zur Bestimmung des Anfangs- und Endzeitpunkts der Integrationszeitdauer;
ad) einer Auslesevorrichtung (16) zur Weitergabe des Pixelsignals (06) während einer Auslesephase, das der Menge des aufintegrierten Photostroms entspricht;
b) einer Vorrichtung zur Bearbeitung der vorbenannten, von den Pixeln weitergegebenen Signale und Bereitstellung daraus erzeugter Signale;
c) einer pixelsteuernden Vorrichtung, die alle oben genannten, in allen Pixeln vorhandenen Vorrichtungen derart mit Steuersignalen versorgt, daß das vorgenannte Signal ein das auf den Bildsensor einstrahlende Lichtbild wiedergebendes Signal darstellt,
wobei das Verfahren die folgenden Schritte aufweist, daß die zeitdauersteuernde Vorrichtung (07-10) der Pixel derart von der integrierenden Vorrichtung (04,05) desselben Pixels beeinflußt wird, daß die zeitdauersteuernde Vorrichtung (07-10) den Endzeitpunkt der Integrationszeitdauer abhängig von der auf das Pixel fallenden Lichtintensität so wählt, daß höhere Lichtintensitäten zu kürzeren Integrationszeitdauern führen, während niedrigere Lichtintensitäten zu längeren Integrationszeitdauern führen und daß in jedem Pixel nach Ablauf der Integrationsdauer eine Integrationsdauerinformation (14) gespeichert wird, die Auskunft darüber gibt, wie lange die Integrationszeitdauer des jeweiligen Pixels betrug, wobei die Integrationsdauerinformation (14) zusammen mit dem aufintegrierten Pixelsignal (06) ausgelesen wird.

2. Verfahren nach Anspruch 1,
**dadurch gekennzeichnet, daß** die zeitdauersteuernde Vorrichtung mit Hilfe eines elektronischen Schalters Einfluß nimmt auf den Endzeitpunkt der Integrationszeitdauer, wobei der elektronische Schalter derart eingebaut ist, daß der elektronische Schalter den Zufluß des Photostromes in die integrierende Vorrichtung zur Beendigung der Integrationsszeit unterbricht.

3. Verfahren nach Anspruch 1,
**dadurch gekennzeichnet, daß** die zeitdauersteuernde Vorrichtung mit Hilfe eines elektronischen Schalters Einfluß nimmt auf den Endzeitpunkt der Integrationszeitdauer, wobei der elektronische Schalter derart eingebaut ist, daß der elektronische Schalter zwischen vorbenannter, integrierender Vorrichtung und einer weiteren, speichernden Vorrichtung derart eingeschleift ist, daß der elektronische Schalter zum besagten Endzeitpunkt den Signalweg zwischen der integrierenden Vorrichtung und der speichernden Vorrichtung derart unterbricht, daß nach dem Ende der Integrationsphase die speichernde Vorrichtung ein Signal gespeichert hat, das in Relation steht zu dem zum besagten Endzeitpunkt von der integrierenden Vorrichtung abgegebenen Signal.

4. Verfahren nach Anspruch 3,
**dadurch gekennzeichnet, daß** die dort benannte Integrationsdauerinformation repräsentiert wird durch ein digitales Signal.

5. Verfahren nach Anspruch 3,
**dadurch gekennzeichnet, daß** die dort benannte Integrationsdauerinformation repräsentiert wird durch ein analoges Signal.

6. Verfahren nach Anspruch 5,
**dadurch gekennzeichnet, daß** die dort benannte Integrationsdauerinformation durch ein amplitudendiskretisiertes, analoges Signal repräsentiert wird.

7. Verfahren nach Anspruch 3,
**dadurch gekennzeichnet, daß** das dort benannte Signal im Pixel autark generiert wird.

8. Verfahren nach Anspruch 3,
**dadurch gekennzeichnet, daß** das dort benannte Signal mit Hilfe von Signalen, die von außen an das Pixel angelegt werden, im Pixel generiert wird.

9. Verfahren nach Anspruch 3,
**dadurch gekennzeichnet, daß** das dort benannte Signal dem Pixel zu jedem Endzeitpunkt passend von außen bereitgestellt wird und vom Pixel zum geeigneten Zeitpunkt festgehalten werden muß.

10. Verfahren nach einem der vorhergehenden Ansprüche,
**dadurch gekennzeichnet, daß** die oben genannte zeitdauersteuernde Vorrichtung sich nur zu wenigen, diskreten Zeitpunkten innerhalb einer Integrationsphase für die Beendigung der Aufintegration des Pixelsignals entscheiden kann und daß vorbenannte, diskrete Zeitpunkte durch von außerhalb an das Pixel angelegte Signale definiert werden.

11. Verfahren nach Anspruch 10,
**dadurch gekennzeichnet, daß** die genannten, von außen definierten Zeitpunkte exponentiell verteilt sind in dem Sinne, daß jeweils eine durch Wahl eines Endzeitpunkts wählbare Integrationszeitdauer um einen festen Faktor länger ist als die nächst kürzere wählbare Integrationszeitdauer.

12. Verfahren nach Anspruch 10,
**dadurch gekennzeichnet, daß** die genannten, von außen definierten Zeitpunkte dualexponentiell verteilt sind in dem Sinne, daß jeweils eine durch Wahl eines Endzeitpunkts wählbare Integrationszeitdauer doppelt so lang ist wie die nächst kürzere, wählbare Integrationszeitdauer.

13. Vorrichtung zum Betrieb von integrierenden Bildsensoren, bestehend aus
a) einer Anordnung von lichtwandelnden Pixeln, die jeweils bestehen aus
aa) einem lichtempfindlichen Element (01) zur photoelektrischen Konvertierung der auf es fallenden Lichtintensität in einen lichtintensitätsabhängigen Photostrom;
ab) einer integrierenden Vorrichtung (04,05), um innerhalb einer Integrationsphase den besagten Photostrom über eine gewisse Integrationszeitdauer zu einem Pixelsignal (06) aufzuintegrieren;
ac) einer zeitdauersteuernden Vorrichtung (07-10) zur Bestimmung des Anfangs- und Endzeitpunkts der Integrationszeitdauer;
ad) einer Auslesevorrichtung (16) zur Weitergabe des Pixelsignals (06) während einer Auslesephase, das der Menge des aufintegrierten Photostroms entspricht;
b) einer Vorrichtung zur Bearbeitung der vorbenannten, von den Pixeln weitergegebenen Signale und Bereitstellung daraus erzeugter Signale;
c) einer pixelsteuernden Vorrichtung, die alle oben genannten, in allen Pixeln vorhandenen Vorrichtungen derart mit Steuersignalen versorgt, daß das vorgenannte Signal ein das auf den Bildsensor einstrahlende Lichtbild wiedergebendes Signal darstellt,
wobei die zeitdauersteuernde Vorrichtung (07-10) der Pixel Mittel aufweist derart, daß sie derart von der integrierenden Vorrichtung (04,05) desselben Pixels beeinflußt wird, daß die zeitdauersteuernde Vorrichtung (07-10) den Endzeitpunkt der Integrationszeitdauer abhängig von der auf das Pixel fallenden Lichtintensität so wählt, daß höhere Lichtintensitäten zu kürzeren Integrationszeitdauern führen, während niedrigere Lichtintensitäten zu längeren Integrationszeitdauern führen und daß in jedem Pixel nach Ablauf der Integrationsdauer eine Integrationsdauerinformation (14) speicherbar ist, die Auskunft darüber gibt, wie lange die Integrationszeitdauer des jeweiligen Pixels betrug, wobei die Integrationsdauerinformation (14) zusammen mit dem aufintegrierten Pixelsignal (06) ausgelesen wird.

## Claims

1. A method for operating integrating image sensors, comprising
a) an arrangement of light-converting pixels which each comprise
aa) a light-sensitive element (01) for photoelectric conversion of the light intensity incident upon it into a photocurrent dependent on light intensity;
ab) an integrating device (04,05), in order to integrate the photocurrent described over a certain integration time duration into a pixel signal (06) during an integration phase;
ac) a duration-controlling device (07-10) for determining the beginning and ending instants of the integration time duration;
ad) a readout device (16) for relaying the pixel signal (06), which corresponds to the amount of the integrated photocurrent, during a readout phase;
b) a device for processing the signals relayed from the pixels previously described and providing signals generated from these;
c) a pixel-controlling device which supplies all of the devices described above present in all pixels with control signals in such a way that the signal previously described represents a signal which reproduces the light image incident on the image sensor,
wherein A method has the following steps, that the duration-controlling device (07-10) of the pixel is influenced by the integrating device (04, 05) of the same pixel in such a way that the duration-controlling device (07-10) selects the ending instant of the integration time duration dependent on the light intensity incident on the pixel in such a way that higher light intensities lead to shorter integration time durations, while lower light intensities lead to longer integration time durations and that in each pixel, after completion of the integration time duration, integration time duration information (14) is stored which indicates how long the integration time duration of the respective pixel was, with the integration time duration information (14) being read out together with the integrated pixel signal (06).

2. A method according to claim 1, **characterized in that** the duration-controlling device assumes influence on the ending instant of the integration time duration with the aid of an electronic switch, with the electronic switch being integrated in such a way that the electronic switch interrupts the flow of the photocurrent into the integrating device to end the integration time.

3. A method according to claim 1, **characterized in that** the duration-controlling device assumes influence on the ending instant of the integration time duration with the aid of an electronic switch, with the electronic switch being integrated in such a way that the electronic switch is looped in between the previously described integrating device and a further storage device in such a way that the electronic switch interrupts the signal path between the integrating device and the storage device at the ending instant described in such a way that after the end of the integration phase the storing device has stored a signal which is related to the signal output from the integrating device at the ending instant described.

4. A method according to claim 3, **characterized in that** the integration time duration information described there is represented by a digital signal.

5. A method according to claim 3, **characterized in that** the integration time duration information described there is represented by an analog signal.

6. A method according to claim 5, **characterized in that** the integration time duration information described there is represented by an analog signal discretized by amplitude.

7. A method according to claim 3, **characterized in that** the signal described there is generated autonomously in the pixel.

8. A method according to claim 3, **characterized in that** the signal described there is generated in the pixel with the aid of signals which are applied to the pixel from outside.

9. A method according to claim 3, **characterized in that** the signal described there is provided to the pixel from outside corresponding to each ending instant and has to be maintained by the pixel at the suitable instant.

10. A method according to one of the preceding claims, **characterized in that** the duration-controlling device described above can only decide to end the integration of the pixel signal at a few, discrete instants within an integration phase and that the discrete instants described above are defined by signals applied to the pixel from outside.

11. A method according to claim 10, **characterized in that** the instants described which are defined from outside are exponentially distributed **in that** each integration time duration selectable by selecting an ending instant is longer by a fixed factor than the next shorter selectable integration time duration.

12. A method according to claim 10, **characterized in that** the times described which are defined from outside are dual-exponentially distributed **in that** each integration time duration selectable by selecting an ending instant is twice as long as the next shorter selectable integration time duration.

13. A device for operating integrating image sensors, comprising
a) an arrangement of light-converting pixels which each comprise
aa) a light-sensitive element (01) for photoelectric conversion of the light intensity incident upon it into a photocurrent dependent on light intensity;
ab) an integrating device (04,05), in order to integrate the photocurrent described over a certain integration time duration into a pixel signal (06) during an integration phase;
ac) a device (07-10) which controls the duration for determining the beginning and ending instants of the integration time duration;
ad) a readout device (16) for relaying the pixel signal (06), which corresponds to the amount of the integrated photocurrent, during a readout phase;
b) a device for processing the signals relayed from the pixels previously described and providing signals generated from these;
c) a pixel-controlling device which supplies all of the devices described above present in all pixels with control signals in such a way that the signal previously described represents a signal which reproduces the light image incident on the image sensor,
wherein the duration-controlling device (07-10) of the pixel has means such that it is influenced by the integrating device (04, 05) of the same pixel in such a way that the duration-controlling device (07-10) selects the ending instant of the integration time duration dependent on the light intensity incident on the pixel in such a way that higher light intensities lead to shorter integration time durations, while lower light intensities lead to longer integration time durations and that in each pixel, after completion of the integration time duration, integration time duration information (14) may be stored which indicates how long the integration time duration of the respective pixel was, with the integration time duration information (14) being read out together with the integrated pixel signal (06).

## Revendications

1. Procédé pour l'exploitation de capteurs intégrateurs d'images, consistant en :
a) un agencement de pixels convertisseurs de lumière, qui consistent respectivement en
aa) un élément photo-sensible (01) pour la conversion photo-électrique de l'intensité lumineuse lui parvenant en un courant photo-électrique dépendant de l'intensité lumineuse ;
ab) un dispositif intégrateur (04, 05) aux fins d'intégrer dans l'espace d'une phase d'intégration le courant photo-électrique évoqué sur une certaine durée d'intégration dans un signal de pixel (06) ;
ac) un dispositif de commande de la durée (07-10) pour la détermination du moment de début et de fin de la durée d'intégration ;
ad) un dispositif de sélection (16) pour la retransmission du signal de pixel (06), qui correspond à la quantité de courant photo-électrique intégré pendant une phase de sélection ;
b) un dispositif de traitement des signaux précités retransmis par les pixels et de mise à disposition des signaux en résultant ;
c) un dispositif de commande des pixels qui alimente en signaux de commande tous les dispositifs précédemment indiqués, dans tous les dispositifs à pixels disponibles, de manière à ce que le signal indiqué précédemment représente un signal restituant l'image lumineuse irradiant sur le capteur d'images ;
ce procédé présentant les étapes suivantes, à savoir que le dispositif de commande de la durée (07-10) des pixels est influencé par le dispositif intégrateur (04, 05) du même pixel de manière à ce que le dispositif de commande de la durée (07-10) choisisse le moment de la fin de la durée d'intégration en fonction de l'intensité lumineuse parvenant au pixel de telle sorte que des intensités lumineuses supérieures aboutissent à des durées d'intégration plus courtes, tandis que des intensités lumineuses inférieures aboutissent à des durées d'intégration plus longues et que, dans chaque pixel, après l'écoulement de la durée d'intégration, une information sur la durée d'intégration (14), qui donne une information sur le temps qu'a duré la période d'intégration du pixel respectif, soit mémorisée, l'information sur la durée d'intégration (14) étant lue avec le signal de pixel (06) intégré.

2. Procédé selon la revendication 1, **caractérisé en ce que** le dispositif de commande de la durée exerce, à l'aide d'un contacteur électronique, une influence sur le moment de la fin de la durée d'intégration, le contacteur électronique étant intégré de manière à ce que le contacteur électronique interrompe l'afflux du courant photo-électrique dans le dispositif intégrateur pour mettre fin au temps d'intégration.

3. Procédé selon la revendication 1, **caractérisé en ce que** le dispositif de commande de la durée exerce une influence à l'aide d'un contacteur électronique sur le moment de la fin de la durée d'intégration, le contacteur électronique étant intégré de manière à ce que le contacteur électronique soit inséré entre le dispositif intégrateur précité et un autre dispositif de mémorisation de telle sorte que le contacteur électronique interrompe, au moment final indiqué, la voie du signal entre le dispositif intégrateur et le dispositif de mémorisation de manière à ce qu'après la fin de la phase d'intégration, le dispositif de mémorisation aie mémorisé un signal qui est en relation avec le signal émis au moment final évoqué par le dispositif intégrateur.

4. Procédé selon la revendication 3, **caractérisé en ce que** l'information sur la durée d'information qui est y indiquée est représentée par un signal digital.

5. Procédé selon la revendication 3, **caractérisé en ce que** l'information sur la durée d'information qui y est indiquée est représentée par un signal analogique.

6. Procédé selon la revendication 5, **caractérisé en ce que** l'information sur la durée d'information qui y est indiquée est représentée par un signal analogique d'amplitude discrétisée.

7. Procédé selon la revendication 3, **caractérisé en ce que** le signal qui est y est indiqué est généré en autarcie dans le pixel.

8. Procédé selon la revendication 3, **caractérisé en ce que** le signal qui y est indiqué est généré dans le pixel à l'aide de signaux qui sont apportés au pixel de l'extérieur.

9. Procédé selon la revendication 3, **caractérisé en ce que** le signal qui y est indiqué est mis de l'extérieur à disposition du pixel de manière adéquate à tout moment final et doit être retenu par le pixel au moment approprié.

10. Procédé selon une des revendications précédentes, **caractérisé en ce que** le dispositif de commande de durée indiqué précédemment ne peut se décider à mettre fin à l'intégration du signal de pixel qu'à quelques moments discrets dans l'espace d'une phase d'intégration et que les moments discrets précités sont définis par des signaux apportés au pixel de l'extérieur.

11. Procédé selon une la revendication 10, **caractérisé en ce que** les moments indiqués, définis de l'extérieur, sont répartis de manière exponentielle dans le sens où une durée d'intégration pouvant être choisie respectivement par la sélection d'un moment de fin est plus longue d'un facteur fixe que la durée d'intégration suivante la plus courte pouvant être choisie.

12. Procédé selon la revendication 10, **caractérisé en ce que** les moments indiqués définis de l'extérieur sont répartis de manière duale-exponentielle au sens où une durée d'intégration pouvant être choisie respectivement par la sélection d'un moment final est deux fois plus longue que la durée d'intégration suivante la plus courte pouvant être choisie.

13. Dispositif pour l'exploitation de capteurs intégrateurs d'images, consistant en
a) un agencement de pixels convertisseurs de lumière, qui consistent respectivement en
aa) un élément photo-sensible (01) pour la conversion photo-électrique de l'intensité lumineuse lui parvenant en un courant photo-électrique dépendant de l'intensité lumineuse ;
ab) un dispositif intégrateur (04, 05) aux fins d'intégrer dans l'espace d'une phase d'intégration le courant photo-électrique évoqué sur une certaine durée d'intégration dans un signal de pixel (06) ;
ac) un dispositif de commande de la durée (07-10) pour la détermination du moment de début et de fin de la durée d'intégration ;
ad) un dispositif de sélection (16) pour la retransmission du signal de pixel (06), qui correspond à la quantité de courant photo-électrique intégré pendant une phase de sélection ;
b) un dispositif de traitement des signaux précités retransmis par les pixels et de mise à disposition des signaux en résultant ;
c) un dispositif de commande des pixels qui alimente en signaux de commande tous les dispositifs précédemment indiqués, dans tous les dispositifs à pixels disponibles, de manière à ce que le signal indiqué précédemment représente un signal restituant l'image lumineuse irradiant sur le capteur d'images ;
le dispositif de commande de durée (07-10) des pixels présentant des moyens tels qu'il soit influencé par le dispositif intégrateur (04, 05) du même pixel de manière à ce que le dispositif de commande de la durée (07-10) choisisse le moment de fin de la durée d'intégration en fonction de l'intensité lumineuse parvenant au pixel de telle sorte que des intensités lumineuses supérieures aboutissent à des durées d'intégration plus courtes, tandis que des intensités lumineuses inférieures aboutissent à des durées d'intégration plus longues et que dans chaque pixel, après l'écoulement de la durée d'intégration, une information sur la durée d'intégration (14), qui donne une information sur le temps qu'a duré la période d'intégration du pixel respectif, puisse être mémorisée, l'information sur la durée d'intégration (14) étant lue avec le signal de pixel (06) intégré.
